(19) **Europäisches Patentamt / European Patent Office / Office européen des brevets**

(11) **EP 4 620 767 A1**

(12) **EUROPEAN PATENT APPLICATION**
published in accordance with Art. 153(4) EPC

(43) Date of publication:
24.09.2025 Bulletin 2025/39

(21) Application number: 23891446.9

(22) Date of filing: 08.11.2023

(51) International Patent Classification (IPC):
$B60W\ 50/06^{(2006.01)}$    $B60R\ 16/02^{(2006.01)}$
$B60W\ 40/02^{(2006.01)}$    $B60W\ 40/12^{(2012.01)}$
$B60W\ 60/00^{(2020.01)}$    $G06N\ 3/04^{(2023.01)}$
$G06N\ 3/08^{(2023.01)}$    $G06N\ 7/00^{(2023.01)}$
$G08G\ 1/09^{(2006.01)}$    $G08G\ 1/16^{(2006.01)}$

(52) Cooperative Patent Classification (CPC):
B60R 16/02; B60W 40/02; B60W 40/12;
B60W 50/06; B60W 60/00; G06N 3/04; G06N 3/08;
G06N 7/00; G08G 1/09; G08G 1/16

(86) International application number:
PCT/JP2023/040302

(87) International publication number:
WO 2024/106294 (23.05.2024 Gazette 2024/21)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 14.11.2022 JP 2022182132
22.12.2022 JP 2022206068
22.12.2022 JP 2022206069
22.12.2022 JP 2022206070

(71) Applicant: SoftBank Group Corp.
Tokyo 105-7537 (JP)

(72) Inventor: SON, Masayoshi
Tokyo 105-7537 (JP)

(74) Representative: DREISS Patentanwälte PartG mbB
Friedrichstraße 6
70174 Stuttgart (DE)

(54) **INFORMATION PROCESSING DEVICE, PROGRAM, AND INFORMATION PROCESSING SYSTEM**

(57) An information processing device disclosed herein includes: an information acquisition unit capable of acquiring plural pieces of information related to a vehicle; plural chips that are provided for each of the plural pieces of information and infer an index value from predetermined information among the plural pieces of information; and a driving control unit that executes driving control of the vehicle on a basis of the plural index values.

FIG.1

**Description**

Technical Field

The present disclosure relates to an information processing device, a program, and an information processing system.

Background Art

Japanese Patent Application Laid-Open (JP-A) No. 2022-035198 describes a vehicle having an autonomous driving function.

SUMMARY OF INVENTION

Solution to Problem

According to an embodiment of the disclosure, an information processing device is provided. An information processing device according to a first aspect includes: an information acquisition unit capable of acquiring a plurality of pieces of information related to a vehicle; a plurality of chips that are provided for each of the plurality of pieces of information and infer an index value from predetermined information among the plurality of pieces of information; and a driving control unit that executes driving control of the vehicle on a basis of the plurality of index values.
In the information processing of a second aspect, in the information processing device of the first aspect, the chip infers the index value by multivariate analysis by an integration method using deep learning.
In the information processing of a third aspect, in the information processing device of the first aspect or the second aspect, the information processing device further includes an anchor chip that aggregates a plurality of the index values inferred by the plurality of chips to infer an index value, in which the driving control unit executes driving control of the vehicle on a basis of the index value aggregated by the anchor chip.
In the information processing of a fourth aspect, in the information processing device of the third aspect, the information acquisition unit acquires a plurality of pieces of the information in units of a billionth of a second, the chip uses the plurality of pieces of the information to perform inference of the index value in units of a billionth of a second, the anchor chip uses the index value to perform aggregation of the index values in units of a billionth of a second, and the driving control unit uses the aggregated index value to perform driving control of the vehicle in units of a billionth of a second.
In the information processing of a fifth aspect, in the information processing device according to any one of the first to fourth aspects, the information processing device causes the other chips to infer the index value according to loads of the plurality of chips.
In the information processing of a sixth aspect, in the information processing device according to any one of the first to fifth aspects, the information processing device causes processing capability of processing in which the chip infers the index value to be varied according to a load of the chip.
In the information processing of a seventh aspect, in the information processing device of the third aspect, the anchor chip aggregates a plurality of the index values inferred by a plurality of the chips on a basis of a predetermined weighting for each of the chips.
In the information processing of an eighth aspect, in the information processing device of the seventh aspect, the weighting is performed by inputting the information to a trained model.
In the information processing of a ninth aspect, in the information processing device of the third aspect, the anchor chip aggregates a plurality of the index values inferred by a plurality of the chips on a basis of predetermined weighting for each type of the information for which the chip calculates the index value.
In the information processing of a tenth aspect, in the information processing device of the ninth aspect, the type of the information includes information with a high priority and information with a low priority, and the anchor chip aggregates a plurality of the index values inferred by a plurality of the chips on the basis of predetermined weighting for each priority of the information for which the chip calculates the index value.
In the information processing of an eleventh aspect, in the information processing device of the fifth aspect, the processing of causing the other chips to infer the index value is shared such that loads of the plurality of chips become equal.
In the information processing of a twelfth aspect, in the information processing device of the fifth aspect, the processing of causing the other chips to infer the index value is shared depending on a heat generation state of the chip.
In the information processing of a thirteenth aspect, in the information processing device of the fifth aspect, in a case in which a remaining capacity of a battery provided in the vehicle is equal to or less than a predetermined threshold value, the processing capability of the plurality of chips is lowered to maintain the battery.

In the information processing of a fourteenth aspect, in the information processing device of the thirteenth aspect, a user is able to select whether to lower the processing capability.

In the information processing of a fifteenth aspect, an information processing device includes: one or a plurality of information acquisition units capable of acquiring information related to a vehicle; one or a plurality of chips that are provided for each one or a plurality of pieces of the information and infer an index value from predetermined information among the plurality of pieces of the information; an index value acquisition unit that acquires the index value from the chips provided in another apparatus different from the vehicle; and a driving control unit that executes driving control of the vehicle on the basis of the plurality of index values inferred in the vehicle and the other apparatus.

**In** the information processing of a sixteenth aspect, in the information processing device of the fifteenth aspect, the chip infers the index value by multivariate analysis by an integration method using deep learning.

In the information processing of a seventeenth aspect, in the information processing device of the fifteenth or sixteenth aspect, the information processing device further includes an anchor chip that aggregates a plurality of the index values inferred by the plurality of chips to infer an index value, in which the driving control unit executes driving control of the vehicle on a basis of the index value aggregated by the anchor chip.

In the information processing of an eighteenth aspect, in the information processing device according to any one of the fifteenth aspect to the seventeenth aspect, the information processing device causes the other chips to infer the index value according to loads of the plurality of chips.

In the information processing of a nineteenth aspect, in the information processing device according to any one of the fifteenth aspect to the eighteenth aspect, the information processing device causes processing capability of processing in which the chip infers the index value to be varied according to a load of the chip.

In the information processing of a twentieth aspect, a program for causing a computer to function as the information processing device according to any one of the first aspect to the nineteenth aspect is provided.

In an information processing system of a twenty-first aspect, an information processing system is provided. The information processing system includes: the information processing device according to any one of the fifteenth aspect to the nineteenth aspect provided in a vehicle; one or a plurality of information acquisition units that are provided in another apparatus different from the vehicle and are capable of acquiring information related to the vehicle; and one or a plurality of chips that are provided for each of one or a plurality of pieces of the information in the other apparatus and infer an index value from predetermined information among a plurality of pieces of the information.

In the information processing system of the twenty-second aspect, in the information processing system of the twenty-first aspect, the other apparatus includes another vehicle that is a vehicle different from the vehicle.

In the information processing system of a twenty-third aspect, in the information processing system of the twenty-first aspect, the other apparatus includes a monitoring device that monitors a road.

In the information processing system of a twenty-fourth aspect, in the information processing system of the twenty-third aspect, a monitoring device installed on a road is included as the monitoring device.

The summary of the disclosure does not enumerate all the necessary features of the disclosure. A sub-combination of these feature groups may also be disclosed.


BRIEF DESCRIPTION OF DRAWINGS

Fig. 1 is a diagram schematically illustrating danger prediction capability of AI of ultra-high performance autonomous driving.

Fig. 2 is a schematic diagram illustrating an example of a vehicle equipped with a Central Brain.

Fig. 3 is a block diagram illustrating an example of an information processing device according to a first embodiment.

Fig. 4 is a diagram schematically illustrating an example of driving control using an index value.

Fig. 5 is a diagram schematically illustrating an example of driving control using an index value.

Fig. 6 is a block diagram schematically illustrating an example of a hardware configuration of a computer that functions as an information processing device.

Fig. 7 is a block diagram illustrating an example of an information processing device according to a second embodiment.

Fig. 8 is a block diagram illustrating an example of an information processing system including an information processing device according to a third embodiment.

Fig. 9 is a block diagram illustrating an example according to a fourth embodiment, which is different from that of Fig. 7 illustrating the information processing system including the information processing device according to the third embodiment.

Fig. 10 is a block diagram illustrating an example according to a fifth embodiment, which is different from that of Figs. 7 and 8 illustrating the information processing systems including the information processing device according to the third embodiment.

DESCRIPTION OF EMBODIMENTS

Hereinafter, the disclosure will be described through embodiments, but the following embodiments do not limit the invention according to the claims. In addition, not all combinations of features described in the embodiments are essential to the disclosed solutions.

The information processing device of the disclosure may obtain the index value necessary for the driving control with high accuracy on the basis of a lot of pieces of information related to the control of the vehicle. Therefore, at least a part of the information processing device of the disclosure may be mounted on a vehicle to realize control of the vehicle.

Furthermore, the information processing device of the disclosure can provide a traveling system that can realize Autonomous Driving in real time on the basis of data obtained by various sensor inputs in AI/multivariate analysis/goal seek/strategy planning/optimal probability solution/optimal speed solution/optimal course management/edge by Level 6, and is adjusted on the basis of a delta optimal solution.

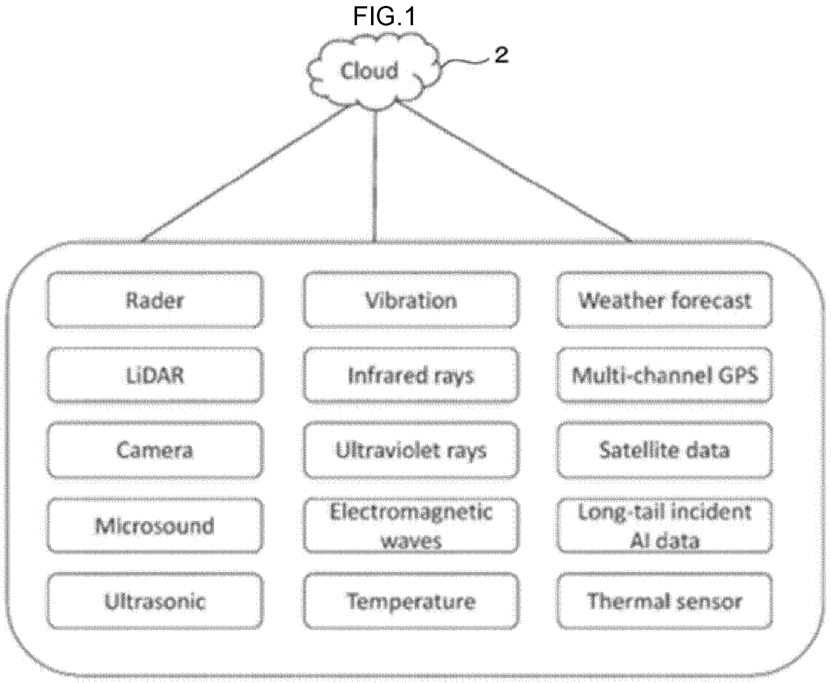

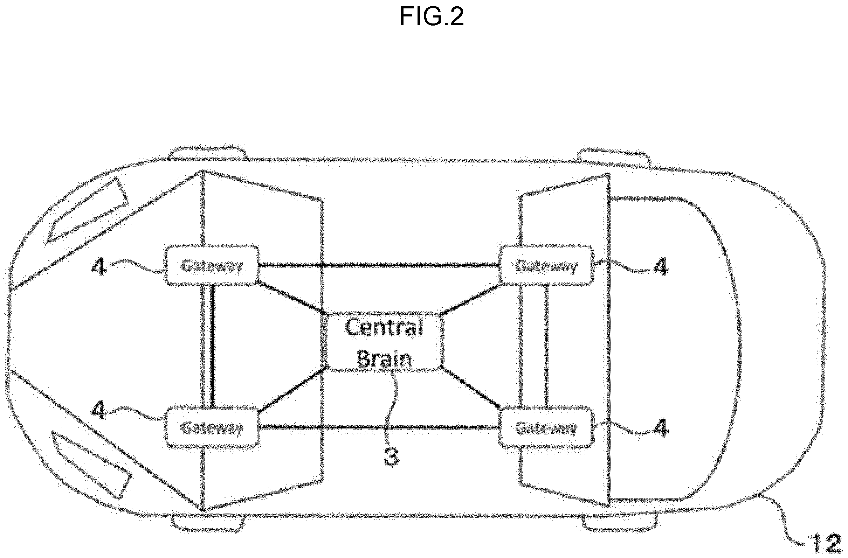

Fig. 1 schematically illustrates the capability of predicting a danger of AI in ultra-high performance autonomous driving according to the embodiment. In the present embodiment, a plurality of types of sensor information is converted into AI data and accumulated in a cloud 2. The AI predicts and determines the best mix of situations every nanosecond (one billionth of a second) and optimizes the driving of a vehicle 12 (see Fig. 2).

Fig. 2 is a schematic diagram illustrating an example of the vehicle 12 equipped with a Central Brain 3. The Central Brain 3 may be an example of an information processing device 1 according to the present embodiment. As illustrated in Fig. 2, in the Central Brain 3, a plurality of Gate Ways 4 may be communicatively connected. The Central Brain 3 according to the present embodiment can realize autonomous driving of Level 6 on the basis of a plurality of pieces of information acquired via the Gate Ways 4.

"Level 6" is a level representing autonomous driving, and corresponds to a level higher than Level 5 representing fully autonomous driving. Level 5 represents fully autonomous driving, but it is at the same level as driving by a person, and there is still a probability that an accident or the like will occur. Level 6 represents a level higher than Level 5, and corresponds to a level at which the probability of occurrence of an accident is lower than Level 5.

The calculation power at Level 6 is about 1000 times the calculation power at Level 5. Therefore, high-performance driving control that cannot be realized at Level 5 can be realized.

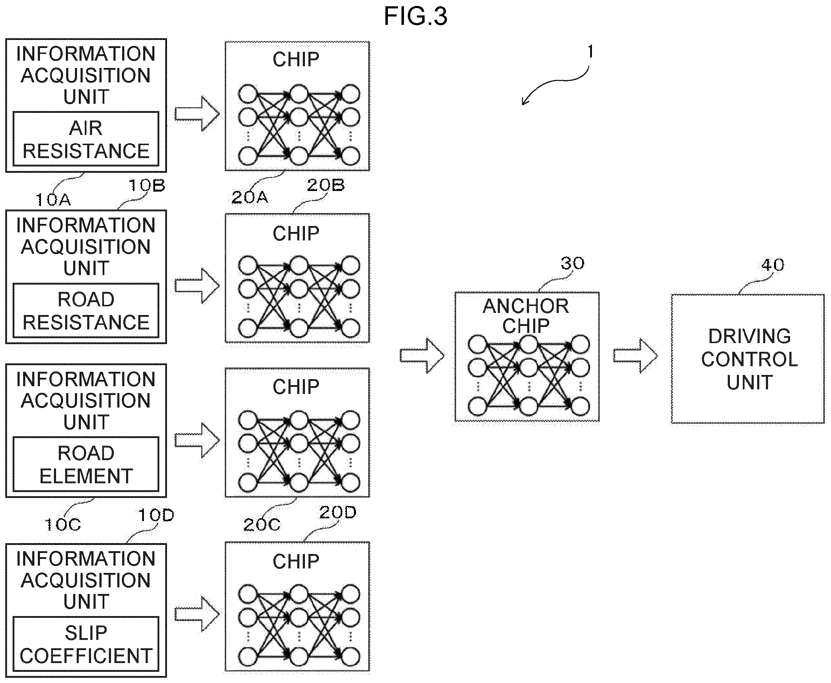

Fig. 3 is a block diagram illustrating an example of the information processing device 1 according to the embodiment of the disclosure. The information processing device 1 according to the present embodiment includes at least an information acquisition unit 10, a chip 20, an anchor chip 30, and a driving control unit 40.

The information acquisition unit 10 can acquire various information related to the vehicle 12. The information acquisition unit 10 can include, for example, a communication unit for acquiring information that can be acquired from sensors attached to various places on the vehicle, a server (not illustrated), or the like via a network. Examples of the sensor included in the information acquisition unit 10 include a radar, a LiDAR, high-pixel/telephoto/ultra-wide angle/360 degrees/high-performance cameras, vision recognition, a fine sound sensor, ultrasonic sensor, vibration sensor, infrared sensor, ultraviolet sensor, electromagnetic wave sensor, temperature sensor, humidity sensor, spot AI weather forecast, high-precision multichannel GPS, low-altitude satellite information, and the like.

Examples of the information that can be acquired by the plurality of types of sensors include a vehicle speed, a wheel rotation speed, a yaw rate, a steering, a brake, air resistance, road resistance, a road element (for example, dirt), a slip coefficient, a temperature and a material of a ground (for example, a road), an outside temperature, a tilt of the ground, a frozen state and a moisture amount of the road, a material and an abrasion state, or an air pressure of each tire, a road width, presence or absence of passing prohibition, presence or absence of an oncoming vehicle, vehicle type information of front and rear vehicles, a cruising state of these vehicles, and a surrounding situation (birds, animals, soccer balls, accident vehicles, earthquakes, fires, winds, typhoons, heavy rain, light rain, snowstorm, fog, and the like). In the present embodiment, using a calculation power of Level 6, these can be detected every one billionth of a second (nanoseconds).

Such information can be divided into types of information. For example, the information regarding autonomous driving can be divided into information with a high priority and information with a low priority. The information with a high priority is information that is an element having an extremely large influence on safe driving. Examples thereof include a road element (for example, dirt), a surrounding situation (birds, animals, soccer balls, accident vehicles, earthquakes, fires, winds, typhoons, heavy rain, light rain, snowstorm, fog, and the like), and the like. In addition, the information with a low priority is information or the like that is an element having a smaller influence on safe driving than the information with a high priority. Examples thereof include a temperature and a material of a ground (for example, a road), an outside temperature, and vehicle type information of front and rear vehicles. The information with a high priority and the information with a low priority are not limited to those described above, and may be changed depending on the vehicle 12, or may be changed depending on the type of the vehicle 12, the use of the vehicle 12, or the like. Furthermore, the information is not limited to the case of being divided into information with a high priority and information with a low priority, and may be divided into other types, for example, information with a high urgency, information with a low urgency, and the like, or may be divided into information acquired by a sensor provided in the vehicle 12, information acquired from a server (not illustrated) or the like via a network, and the like.

It should be particularly noted that the information acquisition unit 10 includes a vehicle lower sensor provided in a lower portion of the vehicle and capable of detecting the temperature, material, and tilt of the traveling ground. The independent smart tilt can be executed using the vehicle lower sensor.

The chip 20 (20A, 20B, 20C, and 20D) is provided for each piece of information acquired by the plurality of information acquisition units 10 (10A, 10B, 10C, and 10D). Then, the index value is inferred from predetermined information among the plurality of pieces of information. For example, in a case in which the information acquired by the information acquisition unit 10 is the air resistance (A), the chip 20A (see Formula (2)) calculates the index value. In a case in which the information is the road resistance (B), the chip 20B (see Formula (3)) calculates the index value. In a case in which the information is the road element (C), the chip 20C (see Formula (4)) calculates the index value. In a case in which the information is the slip coefficient (D), the chip 20D (see Formula (5)) calculates the index value. Here, in the present embodiment, the chip 20 can perform these inferences every one billionth of a second (nanoseconds) using the calculation power of Level 6.

In addition, the chip 20 may be capable of inferring an indexed value related to control of the vehicle from a plurality of pieces of information acquired by the information acquisition unit 10 using machine learning, more specifically, deep learning. In other words, the chip 20 can include artificial intelligence (AI). Here, the index value is, for example, the rotation spin number of the wheel, that is, a speed (V) of the vehicle. The index value is not limited to the rotation spin number of the wheel, and may be another element necessary for driving control of the vehicle 12.

The chip 20 can obtain an accurate index value by performing multivariate analysis (see, for example, Formulas (2) to (5)) by an integration method as shown in the following Formula (1) using the calculation power of Level 6 for data collected every nanosecond by many sensor groups and the like in the information acquisition unit 10. More specifically, while obtaining an integral value of delta values of various Ultra High Resolution with the calculation power of Level 6, an indexed value of each variable is obtained at an edge level and in real time, and a result occurring in the next nanosecond can be obtained as the highest probability theoretical value.

[Mathematical formula 1]

$$V = \int_a^b f(A)dt \qquad (1)$$

[Mathematical formula 2]

$$V_a = DL\big(f(A)(dA/dt)\big) \qquad (2)$$

[Mathematical formula 3]

$$V_b = DL\big(f(B)(dB/dt)\big) \qquad (3)$$

[Mathematical formula 4]

$$V_c = DL\big(f(C)(dC/dt)\big) \qquad (4)$$

[Mathematical formula 5]

$$V_d = DL\big(f(D)(dD/dt)\big) \qquad (5)$$

Here, DL in the formula represents deep learning, and A, B, C, and D represent air resistance, road resistance, a road element (for example, dirt), a slip coefficient, and the like.

The indexed value of each variable obtained in the chip 20 can be further refined by increasing the number of times of deep learning. For example, it is possible to calculate a more accurate index value using a large amount of data such as a tire, rotation of a motor, a steering angle, a material of a road, weather, dust, an influence at the time of secondary curved deceleration, slip, steering for collapse of balance or re-acquisition of balance, and a method of speed control.

The chips 20 do not exchange data with each other, and only the role assigned to each of the chips 20 is calculated. That is, for example, if the chip 20A is assigned to infer the index value from the air resistance (A), only the assigned role is calculated, and if the chip 20B is assigned to infer the index value from the road resistance (B), only the assigned role is calculated. As a result, the calculation load of each chip 20 can be greatly reduced, and the amount of data output from the chip 20 can also be greatly reduced. Then, the anchor chip 30 aggregates a plurality of index values inferred by the chip 20 to infer an index value. Specifically, the index value is calculated by aggregating the index value inferred by the chip 20A from the air resistance (A), the index value inferred by the chip 20B from the road resistance (B), the index value inferred by the chip 20C from the road element (C), and the index value inferred by the chip 20D from the slip coefficient (D) (see Formula 6).

[Mathematical formula 6]

$$V_n = DL\big(f(A, B, C, \ldots, N)(dA_n/dt)\big) \qquad (6)$$

DL in the formula represents deep learning, and A, B, C, D,..., and N represent an index value calculated from air resistance, an index value calculated from road resistance, an index value calculated from a road element, an index value calculated from a slip coefficient, and the like. f(A, B, C, D,..., N) represents a function indicating the behavior of A, B, C, D,..., and N, and $V_n$ represents a value (that is, the index value) output from the deep learning model optimized by performing deep learning on the neural network.

For example, in a case in which a calculation result such as 15 spins in consideration of the air resistance (A), 16 spins in consideration of the road resistance (B), or 14 spins in consideration of the road element (C) is output, the anchor chip 30 calculates how many wheel rotation spins should the each of the motors advance (accelerate/decelerate) for four wheels.

Furthermore, the anchor chip 30 may aggregate the plurality of index values inferred for each of the plurality of chips 20 on the basis of weighting determined in advance for each of the chips 20 instead of equally handling the plurality of index values. For example, in a case in which the weighting weight of the index value inferred from the road element (C) by the chip 20C is higher than that of the index value inferred from the air resistance (A) by the chip 20A, the index value inferred from the road element (C) may be evaluated to be higher than the index value inferred from the air resistance (A), and the aggregated index value may be inferred. The importance levels of the plurality of pieces of information necessary for the autonomous driving are not necessarily equal, and appropriate autonomous driving can be realized by inferring the index value by the information with a higher importance level. In addition, the aggregation based on the weighting may be performed not only in a case in which the aggregation is always performed but also in a case in which a predetermined situation occurs. For example, when the vehicle 12 is in a situation of turning a curve, the weight of the index value inferred from the road resistance may be made larger than the index value inferred from the air resistance (A) in order to use the information of the friction coefficient of the road.

Furthermore, such weighting may be set by the user, or the weight of the weighting may be output by inputting information acquired by the sensor to the trained model. Here, the trained model is, for example, a machine-trained model using information and an inferred index value as training data. In addition, the generation of the trained model is performed using a neural network. The generation of the trained model is not limited to a case in which the generation is performed using a neural network, and other methods may be used. Furthermore, the generation of the trained model may be performed by the information processing device 1 or may be performed by the other apparatus.

In addition, the anchor chip 30 may aggregate the plurality of index values inferred by the plurality of chips 20 on the basis of weighting determined in advance for each type of information for which the chip 20 calculates the index value. For example, as described above, in a case in which the type of information is divided into information with a high priority and information with a low priority, for an index value inferred from information included in information with a high priority, a weighting weight may be set to be higher than an index value inferred from information included in information with a low priority. Furthermore, in a case in which the type of information is divided into information with a high urgency and information with a low urgency, the weighting of the index value inferred from the information included in the information with a high urgency may be set higher than the weighting of the index value inferred from the information included in the information with a low urgency.

The driving control unit 40 executes driving control of the vehicle 12 based on the index value aggregated by the anchor chip 30. The driving control unit 40 may be capable of realizing autonomous driving control of the vehicle. Specifically, it is possible to acquire the highest probability theoretical value of the result occurring in the next nanosecond from the plurality of index values and to perform the driving control of the vehicle in consideration of the probability theoretical value. Here, in the present embodiment, the driving control unit 40 can perform these driving controls every one billionth of a second (nanoseconds) using the calculation power of Level 6.

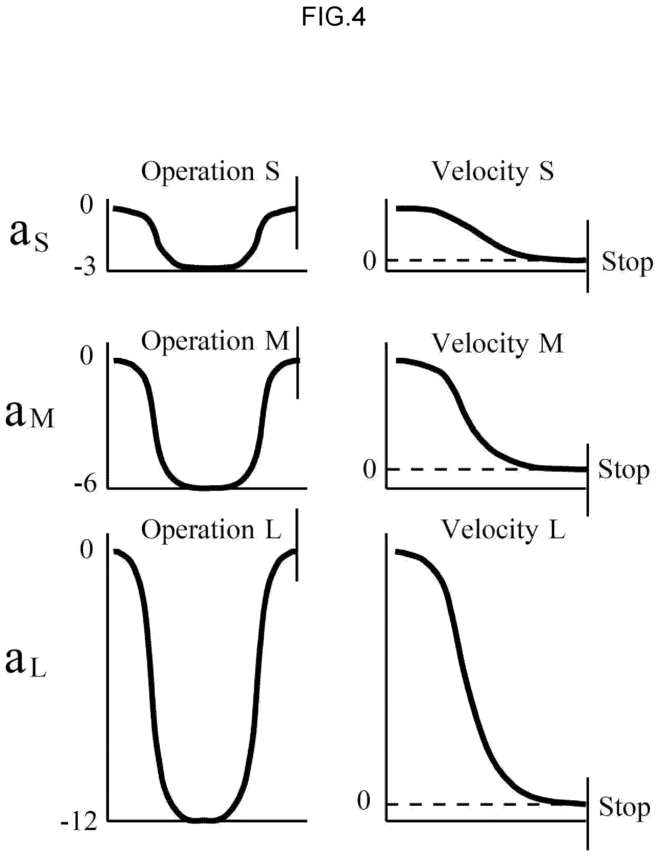

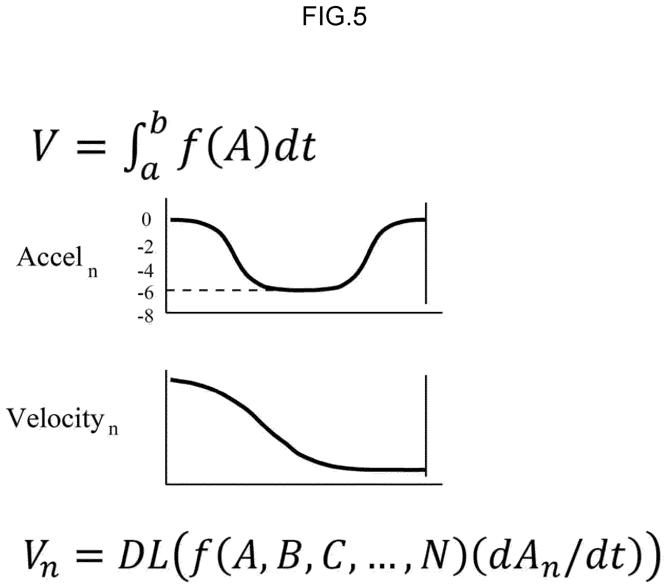

Figs. 4 and 5 are diagrams schematically illustrating an example of driving control using an index value.

According to the information processing device 1 having the above-described configuration, since analysis and inference of information can be performed using the calculation power of Level 6 that is extremely larger than the calculation power of Level 5, it is possible to perform detailed analysis at a level that is not compared with the related art. This enables vehicle control for safe autonomous driving. Furthermore, the multivariate analysis using the AI can produce a value difference of 1000 times compared to the world at Level 5.

Which chip 20 is caused to calculate which index value is not limited to causing one chip 20 to calculate for one index. For example, when it is known at the design stage that both the index value for the air resistance (A) and the index value for the road resistance (B) can be calculated by the chip A, a plurality of indexes may be calculated by one chip 20A. Furthermore, when it is known at the design stage that the calculation capability of only the chip 20A is not sufficient to calculate the index value for the air resistance (A), one index value may be calculated by a plurality of chips, such as the chip 20A and the chip 20B, that are responsible for calculating the index value for the air resistance (A).

In addition, the chip 20 is not limited to the case of inferring the index value from predetermined information. The index value may be inferred by other chips 20 according to the load of the chip 20. For example, in a case in which the load of the chip 20A is heavy, in addition to the chip 20A, the chip 20B may also infer the index value for the air resistance (A) that the chip 20A has been in charge of processing. In addition, in a case in which the load of the chip 20 is light, one chip 20 may infer a plurality of index values. In addition, the processing of causing the other chips 20 to infer the index value may be shared so that the loads of the plurality of chips 20 become equal. With this configuration, it is possible to prevent a load from being applied only to some of the chips 20. The case of causing the other chips 20 to share the processing of inferring the index value is not limited to the case of causing two chips 20 to share the processing together with another chip 20, and the processing may be shared by three or more chips 20.

In addition, a sensor capable of measuring the temperature of each chip 20 may be provided, and the processing of causing other chips 20 to infer the index value may be shared depending on the heat generation status of the chip 20. For example, in a case in which the temperature of the chip 20A exceeds a predetermined threshold value, the inference of the index value that has been processed by the chip 20A may be processed by other chips 20, for example, the chip 20B. With this configuration, it is possible to prevent thermal runaway of some of the chips 20, reduction in processing due to heat generation, and the like.

In addition, the chip 20 determined in advance to infer important information that greatly affects safe driving may not be caused to share processing of inferring an index value of information determined in advance to be inferred by other chips 20. As a result, it is possible to secure the processing capability of the chip 20 determined in advance to infer important information.

In addition, the processing capability of the processing in which the chip 20 infers the index value may be varied according to the load of the chip 20. Specifically, when the load is light, such as when the vehicle 12 is traveling on a flat road or traveling in a place with apparently less danger, each chip 20 does not need to perform calculation every one billionth of a second, and may perform calculation at a slower speed, such as by reducing the throughput. However, in a case in which it is sensed that there is a risk (for example, a case in which it is found that a truck is burning on a highway, or the like), an instruction to fully operate inference of a necessary index value is issued. In addition, the calculation pace may be allocated, and the strength of each of the chip 20A for calculating the air resistance (A), the chip 20B for calculating the road resistance (B), and the like may be added as necessary.

In addition, when the remaining capacity of the battery provided in the vehicle 12 becomes equal to or less than a predetermined threshold value, the processing capacity of the plurality of chips 20 may be lowered to maintain the battery. For example, in a case in which the remaining capacity of the battery is reduced, the mode may be shifted to a power saving mode in which the processing capacity of the chip 20 is lowered to suppress the consumption of the battery. This example is particularly effective when the vehicle 12 is an automobile that travels using a battery such as an electric vehicle. With such a configuration, it is possible to secure a travelable distance even in a case in which the remaining capacity of the battery decreases. Here, the processing capability of the chip 20 is changed by changing the operation frequency of the chip 20 or the like.

In addition, for example, the distance from the traveling position of the vehicle 12 to the destination or the next charging station is calculated, and in a case of a position where the remaining capacity of the battery is expected to run out during the movement with the processing capability of the normal chip 20, the processing capability of the chip 20 may be lowered to maintain the battery.

In addition, in a case in which the remaining capacity of the battery becomes equal to or less than a predetermined threshold, the user may select whether to lower the processing capacity of the chip 20. Even in a case in which the remaining capacity of the battery is reduced, there may be a case in which it is not desired to lower the processing capacity of the chip 20, a case in which it is an operation plan in which there is a plan to charge, or the like, and a case in which it is desirable to leave selection to the user is considered. It is desirable that such a user can select even before the remaining capacity of the battery becomes equal to or less than the predetermined threshold, or even after the processing capability of the chip 20 is lowered due to the remaining capacity of the battery becoming equal to or less than the predetermined threshold. Therefore, when the processing capability of the chip 20 is lowered, it is desirable to notify the user that the processing capability of the chip 20 is lowered.

In addition, the theoretical value of the index value may be crystallized and stored. For example, as a result of a plurality of vehicles 12 traveling a very long distance, accumulating a large amount of travel data, and performing deep learning on the travel data, it is possible to grasp as a theoretical value index value such as what is index value for the air resistance (A) at the moment, what is index value when the information at the moment is the road resistance (B), what is index value when the information at the moment is the road element (C), and what is index value when the information at that moment is the slip coefficient (D). It is called crystallization.

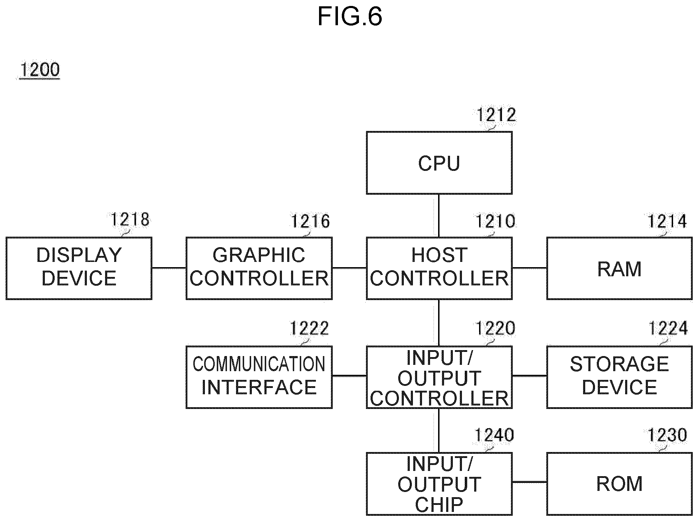

Fig. 6 schematically illustrates an example of a hardware configuration of a computer 1200 that functions as the information processing device (Central Brain 3). The program installed in the computer 1200 can cause the computer 1200 to function as one or more "units" of the device according to the embodiment, or cause the computer 1200 to execute an operation associated with the device according to each embodiment or one or more "units" thereof, and/or cause the computer 1200 to execute a process according to each embodiment or a stage of the process. Such programs may be executed by a CPU 1212 to cause the computer 1200 to perform certain operations associated with some or all of the blocks in the flowcharts and block diagrams described herein.

The computer 1200 according to each embodiment may include a CPU 1212, a RAM 1214, and a graphic controller 1216, which may be mutually connected by a host controller 1210. The computer 1200 also may include input/output units such as a communication interface 1222, a storage device 1224, a DVD drive, and an IC card drive, and the input/output units may be connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also may include a ROM 1230 and legacy input/output units such as a keyboard, and the input/output units may be connected to the input/output controller 1220 via an input/output chip 1240.

The CPU 1212 may operate according to programs stored in the ROM 1230 and the RAM 1214, thereby controlling each unit. The graphic controller 1216 can obtain image data generated by the CPU 1212 in a frame buffer or the like provided in the RAM 1214 or the graphic controller itself, and causes the image data to be displayed on the display device 1218.

The communication interface 1222 can communicate with other electronic devices via a network. The storage device 1224 can store programs and data used by the CPU 1212 in the computer 1200. The DVD drive can read a program or data from a DVD-ROM or the like and provide the program or data to the storage device 1224. The IC card drive can read the program and data from the IC card and/or write the program and data to the IC card.

The ROM 1230 can store therein a boot program executed by the computer 1200 at the time of activation and/or a program depending on hardware of the computer 1200. The input/output chip 1240 may also connect various input/output units to the input/output controller 1220 via a USB port, a parallel port, a serial port, a keyboard port, a mouse port, or the like.

The program may be provided by a computer-readable storage medium such as a DVD-ROM or an IC card. The program may be read from a computer-readable storage medium, installed in the storage device 1224, the RAM 1214, or the ROM 1230, which is also an example of a computer-readable storage medium, and executed by the CPU 1212. The information processing described in these programs can be read by the computer 1200 and provide cooperation between the programs and the various types of hardware resources described above. The device or method may be configured by implementing operation or processing of information according to use of the computer 1200.

For example, in a case in which communication is performed between the computer 1200 and an external device, the CPU 1212 may execute a communication program loaded in the RAM 1214 and instruct the communication interface 1222 to perform communication processing on the basis of processing described in the communication program. Under the control of the CPU 1212, the communication interface 1222 can read transmission data stored in a transmission buffer area provided in a recording medium such as the RAM 1214, the storage device 1224, the DVD-ROM, or the IC card, transmit the read transmission data to the network, or write reception data received from the network to a reception buffer area or the like provided on the recording medium.

In addition, the CPU 1212 may cause the RAM 1214 to read all or a necessary portion of a file or database stored in an external recording medium such as the storage device 1224, a DVD drive (DVD-ROM), an IC card, or the like, and may execute various types of processing on data on the RAM 1214. Next, the CPU 1212 may write back the processed data to the external recording medium.

Various types of information such as various types of programs, data, tables, and databases may be stored in a recording medium and subjected to information processing. The CPU 1212 may execute various types of processing on the data read from the RAM 1214, including various types of operations, information processing, condition determination, conditional branching, unconditional branching, information retrieval/replacement, and the like, which are described throughout the disclosure and specified by a command sequence of a program, and writes back the results to the RAM 1214. In addition, the CPU 1212 may search for information in a file, a database, or the like in the recording medium. For example, in a case in which a plurality of entries each having an attribute value of a first attribute associated with an attribute value of a second attribute is stored in the recording medium, the CPU 1212 may search for an entry in which the attribute value of the first attribute matches the specified condition from the plurality of entries, read the attribute value of the second attribute stored in the entry, and thereby acquire the attribute value of the second attribute associated with the first attribute satisfying the predetermined condition.

The program or software module described above may be stored in a computer-readable storage medium on the computer 1200 or in the vicinity of the computer 1200. Furthermore, a recording medium such as a hard disk or a RAM can be provided in a server system connected to a dedicated communication network or the Internet can be used as a computer-readable storage medium, thereby providing a program to the computer 1200 via the network.

The blocks in the flowcharts and block diagrams in this embodiment may represent stages of a process in which an operation is performed or "units" of a device that are responsible for performing the operation. Certain stages and "units" may be implemented by dedicated circuit, programmable circuit provided with computer-readable instructions stored on a computer-readable storage medium, and/or a processor provided with computer-readable instructions stored on a computer-readable storage medium. The dedicated circuits may include digital and/or analog hardware circuits, and may include integrated circuits (ICs) and/or discrete circuits. The programmable circuit may include reconfigurable hardware circuit including, for example, logical conjunction, logical disjunction, exclusive disjunction, NAND, NOR, and other logical operations, flip-flops, registers, and memory elements, such as field programmable gate arrays (FPGA) and programmable logic arrays (PLA).

A computer-readable storage medium may include any tangible device capable of storing instructions for execution by a suitable device, such that a computer-readable storage medium having instructions stored therein includes a product including instructions that may be executed to create means for performing the operations specified in the flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy disk (registered trademark), a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-Ray disk (registered trademark), a memory stick, an integrated circuit card, and the like.

The computer-readable instructions may include either source code or object code written in any combination of one or more programming languages, including assembler instructions, instruction-set-architecture (ISA) instructions, machine instructions, machinedependent instructions, microcode, firmware instructions, state-setting data, or an object oriented programming language such as Smalltalk (registered trademark), JAVA (registered trademark), C++, or the like, and conventional procedural programming languages, such as the "C" programming language or similar programming languages.

The computer-readable instructions may be provided for a processor of general purpose computer, special purpose computer, or other programmable data processing device, or a programmable circuit, either locally or over a wide area network (WAN), such as a local area network (LAN), the Internet, or the like, to cause the processor of general purpose computer, special purpose computer, or other programmable data processing device, or the programmable circuit to execute the computer-readable instructions to generate means for performing the operations specified in the flowcharts or block diagrams. Examples of the processor include a computer processor, a processing unit, a microprocessor, a digital signal processor, a controller, a microcontroller, and the like.

Next, a second embodiment will be described. In the second embodiment, the same elements, members, and the like as those in the first embodiment are denoted by the same reference numerals as those in the first embodiment, and a detailed description thereof will be omitted.

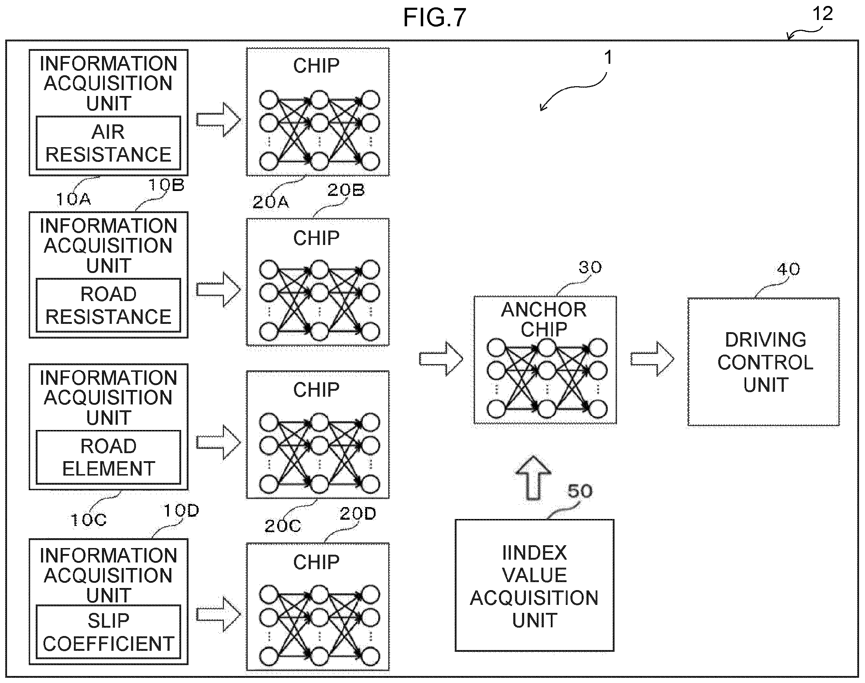

Fig. 7 is a block diagram illustrating an example of an information processing device 1 according to the second embodiment of the disclosure. The information processing device 1 according to the present embodiment includes at least an information acquisition unit 10, a chip 20, an anchor chip 30, a driving control unit 40, and an index value acquisition unit 50.

The chip 20 (20A, 20B, 20C, and 20D) is provided for each piece of information acquired by the plurality of information acquisition units 10 (10A, 10B, 10C, and 10D). Then, the index value is inferred from predetermined information among the plurality of pieces of information. For example, among the plurality of information acquisition units 10, when the information acquired by the information acquisition unit 10A is the air resistance (A), the chip 20A (see Formula (2)) calculates the index value, when the information acquired by the information acquisition unit 10B is the road resistance (B), the chip 20B (see Formula (3)) calculates the index value, when the information acquired by the information acquisition unit 10C is the road element (C), the chip 20C (see Formula (4)) calculates the index value, and when the information acquired by the information acquisition unit 10D is the slip coefficient (D), the chip 20D (see Formula (5)) calculates the index value. Here, in the present embodiment, the chip 20 can perform these inferences every one billionth of a second (nanoseconds) using the calculation power of Level 6.

The information processing device 1 of the present embodiment can execute driving control of the vehicle 12 on the basis of an index value inferred in the "other apparatus" different from the vehicle 12 to be controlled. The "other apparatus" includes, for example, the other vehicle that is a vehicle including an information processing device similar to the information processing device 1 of the present embodiment. Since the other vehicle includes an information processing device similar to the information processing device 1, the information processing device includes an information acquisition unit and a chip similar to the information acquisition unit 10 and the chip 20 of the present embodiment.

In addition, the "other apparatus" includes a device (for example, traffic lights, various signs and signboards, utility poles, street lights, and control devices) installed on a road and configured to include the information acquisition unit 10 and the chip 20 of the present embodiment. Furthermore, the "other apparatus" includes various devices, members, and structures (for example, a median strip, a guardrail, a roadside building (a building or the like), an aircraft (a manned aircraft and an unmanned drone), an artificial satellite, and the like) installed outside the road and configured to include the information acquisition unit 10 and the chip 20 of the present embodiment.

The index value acquisition unit 50 acquires index values inferred in these "other apparatuses".

The driving control unit 40 executes driving control of the vehicle 12 on the basis of the index value aggregated by the anchor chip 30 and the index value acquired by the index value acquisition unit 50. The driving control unit 40 may be capable of realizing autonomous driving control of the vehicle. Specifically, it is possible to acquire the highest probability theoretical value of the result occurring in the next nanosecond from the plurality of index values and to perform the driving control of the vehicle in consideration of the probability theoretical value. Here, in the present embodiment, the driving control unit 40 can perform these driving controls every one billionth of a second (nanoseconds) using the calculation power of Level 6.

Next, a third embodiment will be described. In the third embodiment, the same elements, members, and the like as those in the first embodiment and the second embodiment are denoted by the same reference numerals as those in the first embodiment and the second embodiment, and a detailed description thereof will be omitted.

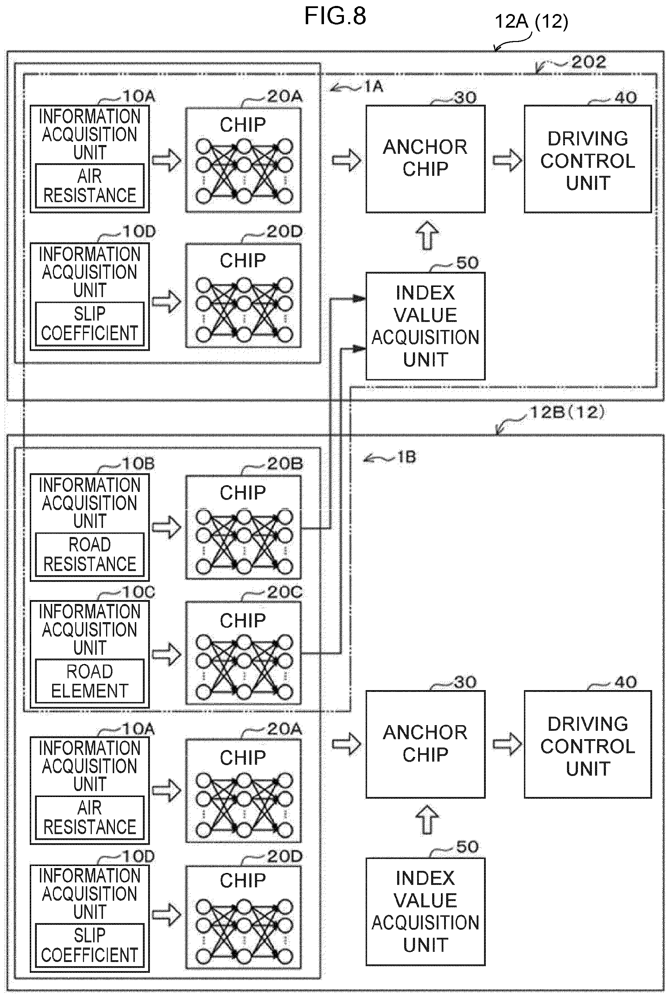

Fig. 8 schematically illustrates an information processing system 202 as the third embodiment of the disclosure. The information processing system 202 targets a plurality of vehicles 12 including a host vehicle 12A and another vehicle 12B.

The host vehicle 12A includes an information processing device 1A. In the third embodiment, the information processing device 1A includes, for example, an information acquisition unit 10A capable of acquiring information on air resistance and an information acquisition unit 10D capable of acquiring information on a slip coefficient. The chip 20 includes a chip 20A that acquires an index value from information of air resistance and a chip 20D that acquires an index value from information of a slip coefficient. The information processing device 1A of the host vehicle 12A may further include an information acquisition unit 10B capable of acquiring information on road resistance, an information acquisition unit 10C capable of acquiring information on road elements, and a chip 20B and a chip 20C that acquire index values from these pieces of information, as in the information processing device 1 of the second embodiment illustrated in Fig. 7.

The other vehicle 12B includes an information processing device 1B. Similarly to the information processing device 1 illustrated in Fig. 7, the information processing device 1B includes, for example, an information acquisition unit 10A capable of acquiring information on air resistance, an information acquisition unit 10B capable of acquiring information on road resistance, an information acquisition unit 10C capable of acquiring information on road elements, and an information acquisition unit 10D capable of acquiring information on slip coefficients. Furthermore, the information processing device 1B includes a chip 20A, a chip 20B, a chip 20C, and a chip 20D that acquire index values from these pieces of information.

An information processing system 202 of the third embodiment includes the information processing device 1A provided in the host vehicle 12A, and the information acquisition units 10B and 10C and the chips 20B and 20C provided in the other vehicle 12B.

In the information processing system 202 of the third embodiment, the index values from the chips 20B and 20C of the information processing device 1B of the other vehicle 12B can be transmitted to the index value acquisition unit 50 of the information processing device 1A of the host vehicle 12A. The transmission of these index values may be performed, for example, by direct communication between the other vehicle 12B and the host vehicle 12A, but may be performed via the cloud 2 illustrated in Fig. 1, a server capable of passing data, or the like.

The information processing device 1A of the host vehicle 12A does not include the information acquisition units 10B and 10C and the chips 20B and 20C, but the index value inferred from the information of the road resistance is acquired from the chip 20B of the information processing device 1B. In addition, the index value inferred from the information of the road element is also acquired from the chip 20C of the information processing device 1B. Therefore, even in the information processing device 1A that does not include the information acquisition units 10B and 10C and the chips 20B and 20C, the index values inferred from the respective information of the air resistance, the slip coefficient, the road resistance, and the road element can be aggregated by the anchor chip 30.

In the information processing device 1A of the host vehicle 12A, the configuration is simplified in the configuration not including the information acquisition units 10B and 10C and the chips 20B and 20C. As described above, the information processing device 1A of the host vehicle 12A may have a configuration including the information acquisition units 10B and 10C and the chips 20B and 20C, similarly to the second embodiment illustrated in Fig. 7. In this case, in a case in which the information acquisition units 10B and 10C and the chips 20B and 20C included in the information processing device 1B of the other vehicle 12B have higher information acquisition capability and index value inference capability than the information acquisition units 10B and 10C and the chips 20B and 20C included in the information processing device 1A of the host vehicle 12A, a more accurate index value can be acquired as the index value of the road resistance and the index value of the road element from the chips 20B and 20C included in the information processing device 1B of the other vehicle 12B.

Next, a fourth embodiment will be described. In the fourth embodiment, the same elements, members, and the like as those in the first embodiment and the second embodiment are denoted by the same reference numerals as those in the first embodiment and the second embodiment, and a detailed description thereof will be omitted.

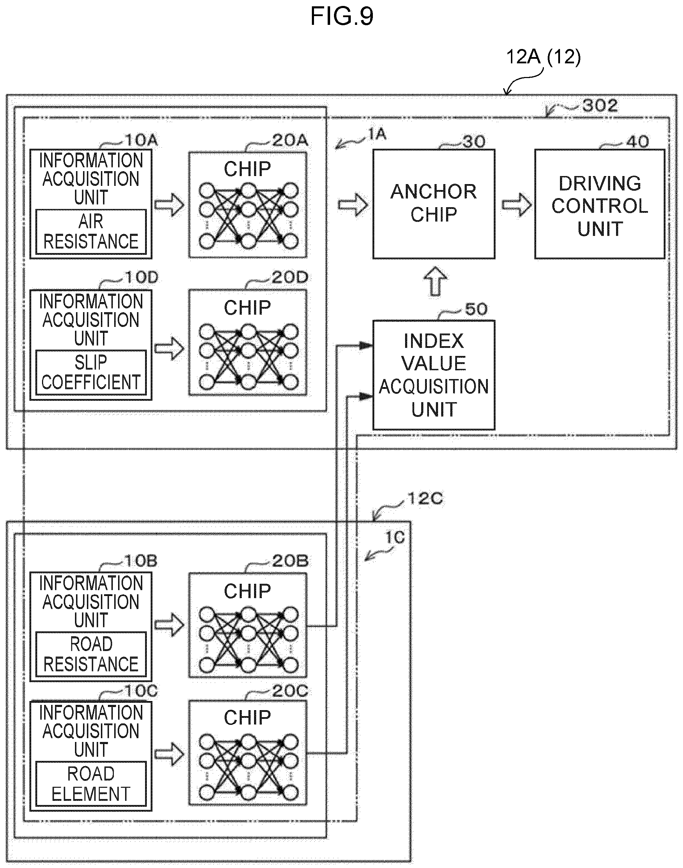

Fig. 9 schematically illustrates an information processing system 302 as the fourth embodiment of the disclosure. The information processing system 302 targets a configuration including a host vehicle 12A and a monitoring device 12C. The monitoring device 12C is a device that monitors a road, and is installed on a road, for example.

The monitoring device 12C includes, for example, an information acquisition unit 10B and an information acquisition unit 10C capable of acquiring each piece of information of the road resistance and the road element. Further, the monitoring device 12C includes a chip 20B and a chip 20C that acquire an index value from these pieces of information.

The information processing system 302 of the fourth embodiment includes an information processing device 1A provided in the host vehicle 12A, the information acquisition units 10B and 10C and the chips 20B and 20C provided in the monitoring device 12C.

In the information processing system 302 of the fourth embodiment, the index values from the chips 20B and 20C of the monitoring device 12C can be transmitted to an index value acquisition unit 50 of the information processing device 1A of the host vehicle 12A. The transmission of these index values may be performed, for example, by direct communication between the monitoring device 12C and the host vehicle 12A, but may be performed via the cloud 2 illustrated in Fig. 1, a server capable of passing data, or the like.

The information processing device 1A of the host vehicle 12A does not include the information acquisition units 10B and 10C and the chips 20B and 20C, but the index value inferred from the information of the road resistance is acquired from the chip 20B of the monitoring device 12C. In addition, the index value inferred from the information of the road element is also acquired from the chip 20C of the monitoring device 12C. Therefore, even in the information processing device 1A that does not include the information acquisition units 10B and 10B and the chips 20B and 20C, the index values inferred from the respective information of the air resistance, the slip coefficient, the road resistance, and the road element can be aggregated by the anchor chip 30.

The information processing device 1A of the host vehicle 12A does not include the information acquisition units 10C and 10D and the chips 20C and 20D, and the configuration is simplified. Also in the fourth embodiment, the information processing device 1A of the host vehicle 12A may be configured to further include the information acquisition unit 10B capable of acquiring information on road resistance, the information acquisition unit 10C capable of acquiring information on road elements, and the chip 20B and the chip 20C that acquire index values from these pieces of information. In this case, when the information acquisition units 10B and 10C and the chips 20B and 20C included in the monitoring device 12C have higher information acquisition capability and index value inference capability than the information acquisition units 10B and 10C and the chips 20B and 20C included in the information processing device 1A of the host vehicle 12A, a more accurate index value can be acquired from the chips 20B and 20C included in the monitoring device 12C as the index value of the road resistance and the index value of the road element.

The monitoring device 12C of the fourth embodiment includes, for example, a configuration installed on a road and provided in various on-road devices (for example, traffic lights, various signs, signboards, utility poles, street lights, and control devices) configured to include the information acquisition unit 10 and the chip 20 of the disclosed technology. Furthermore, the monitoring device 12C is not limited to a monitoring device installed on a road, and includes a configuration provided in various devices, members, and structures (for example, a median strip, a guardrail, a roadside building (a building or the like), an aircraft (a manned aircraft and an unmanned drone), an artificial satellite, and the like) installed outside the road and configured to include the information acquisition unit 10 and the chip 20 of the disclosed technology. In short, as long as the monitoring device is a device that monitors a road, an installation place and an installation form thereof are not limited. In the case of a monitoring device installed on a road, there is a high possibility that the road can be monitored at a position close to the road to be monitored as compared with a monitoring device installed other than the road.

Next, a fifth embodiment will be described. In the fifth embodiment, the same elements, members, and the like as those in each of the first to fourth embodiments are denoted by the same reference numerals as those in each of the first to fourth embodiments, and a detailed description thereof will be omitted.

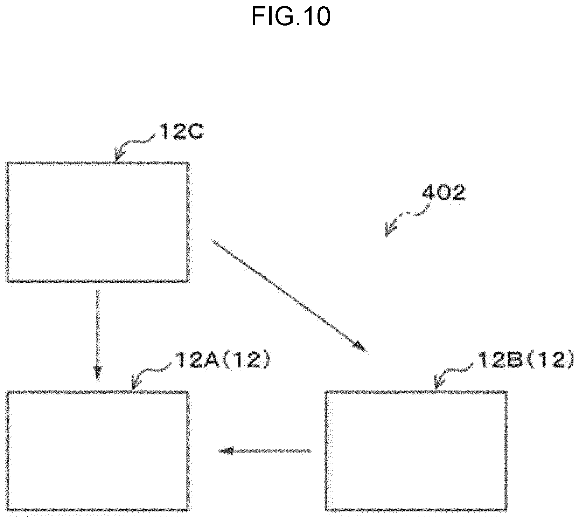

Fig. 10 schematically illustrates an information processing system 402 as the fifth embodiment of the disclosure. The information processing system 402 of the fifth embodiment is directed to a configuration including a host vehicle 12A, another vehicle 12B, and a monitoring device 12C. The internal configuration of the host vehicle 12A is similar to that of the third embodiment and the fourth embodiment, for example. The internal configuration of the other vehicle 12B is, for example, similar to that of the third embodiment. The internal configuration of the monitoring device 12C is similar to that of the fourth embodiment, for example.

In the information processing system 402 of the fifth embodiment, the information processing device 1A (see Fig. 8) of the host vehicle 12A does not include the information acquisition units 10B and 10C and the chips 20B and 20C. However, the index value inferred from the information on the road resistance is acquired from the information processing device 1B of the other vehicle 12B (see Fig. 8) or the chip 20B of the monitoring device 12C (see Fig. 9). In addition, the index value inferred from the information of the road element is also acquired from the information processing device 1B of the other vehicle 12B or the chip 20C of the monitoring device 12C. Therefore, even in the information processing device 1A that does not include the information acquisition units 10B and 10C and the chips 20B and 20C, the index values inferred from the respective information of the air resistance, the slip coefficient, the road resistance, and the road element can be aggregated by the anchor chip 30.

In the information processing system 402 of the fifth embodiment, whether the index value inferred from the information of the road resistance is acquired from the information processing device 1B of the other vehicle 12B or the chip 20B of the monitoring device 12C can be switched according to the situation, for example. As an example, the information can be acquired from the chip 20B closer to the relative position from the host vehicle 12A among the other vehicle 12B and the monitoring device 12C. The index value inferred from the information of the road element can also be acquired from the chip 20C closer to the relative position from the host vehicle 12A among the other vehicle 12B and the monitoring device 12C.

In each of the third to fifth embodiments, what index value is calculated by which chip 20 is not limited to being calculated by one chip 20 for one index. For example, in the information processing device 1B, when it is known at the design stage that both the index value for the road resistance and the index value for the road element can be calculated by one chip 20, these index values may be calculated by one chip 20, for example, a chip 20C.

In addition, also in each of the third to fifth embodiments, the driving control unit 40 can perform the driving control every one billionth of a second (nanoseconds) using the calculation power of Level 6. For example, in the information processing device 1A, index values transmitted from the chips 20B and 20C of the information processing device 1B of the other vehicle 12B are aggregated by the anchor chip 30, and the driving control unit 40 executes driving control of the vehicle 12 on the basis of the index values. In this case, the driving control is performed every one billionth of a second (nanoseconds).

Although the disclosure has been described with reference to the exemplary embodiments, the technical scope of the disclosure is not limited to the scope described in the exemplary embodiments. It is apparent to those skilled in the art that various modifications or improvements can be made to the above embodiments. It is apparent from the description of the claims that a mode to which such a change or improvement is added can also be included in the technical scope of the disclosure.

It should be noted that the order of execution of each processing such as operations, procedures, steps, and stages in the devices, systems, programs, and methods illustrated in the claims, the specification, and the drawings can be realized in any order unless "before", "prior to", or the like is explicitly stated, and unless the output of the previous processing is used in the later processing. Even if the operation flow in the claims, the specification, and the drawings is described using "First,", "Next,", and the like for convenience, it does not mean that it is essential to perform in this order.

The disclosure of Japanese Patent Application No. 2022-182132 filed on November 14, 2022, the disclosure of Japanese Patent Application No. 2022-206068 filed on December 22, 2022, the disclosure of Japanese Patent Application No. 2022-206069 filed on December 22, 2022, and the disclosure of Japanese Patent Application No. 2022-206070 filed on December 22, 2022 are incorporated herein by reference in their entirety.

All documents, patent applications, and technical standards described in this specification are incorporated herein by reference to the same extent as if each individual document, patent application, and technical standard were specifically and individually indicated to be incorporated by reference.

**Claims**

1. An information processing device comprising:

    an information acquisition unit capable of acquiring a plurality of pieces of information related to a vehicle;
    a plurality of chips that are provided for each of the plurality of pieces of information and infer an index value from predetermined information among the plurality of pieces of information; and
    a driving control unit that executes driving control of the vehicle on a basis of the plurality of index values.

2. The information processing device according to claim 1, wherein
the chip infers the index value by multivariate analysis by an integration method using deep learning.

3. The information processing device according to claim 1, further comprising

an anchor chip that aggregates a plurality of the index values inferred by the plurality of chips to infer an index value,
wherein the driving control unit executes driving control of the vehicle on a basis of the index value aggregated by the anchor chip.

4. The information processing device according to claim 3, wherein

the information acquisition unit acquires a plurality of pieces of the information in units of a billionth of a second,
the chip uses the plurality of pieces of the information to perform inference of the index value in units of a billionth of a second,
the anchor chip uses the index value to perform aggregation of the index values in units of a billionth of a second, and
the driving control unit uses the aggregated index value to perform driving control of the vehicle in units of a billionth of a second.

5. The information processing device according to claim 1, wherein the information processing device causes the other chips to infer the index value according to loads of the plurality of chips.

6. The information processing device according to claim 1, wherein the information processing device causes processing capability of processing in which the chip infers the index value to be varied according to a load of the chip.

7. The information processing device according to claim 3, wherein
the anchor chip aggregates a plurality of the index values inferred by a plurality of the chips on a basis of a predetermined weighting for each of the chips.

8. The information processing device according to claim 7, wherein the weighting is performed by inputting the information to a trained model.

9. The information processing device according to claim 3, wherein
the anchor chip aggregates a plurality of the index values inferred by a plurality of the chips on a basis of predetermined weighting for each type of the information for which the chip calculates the index value.

10. The information processing device according to claim 9, wherein

the type of the information includes information with a high priority and information with a low priority, and
the anchor chip aggregates a plurality of the index values inferred by a plurality of the chips on the basis of predetermined weighting for each priority of the information for which the chip calculates the index value.

11. The information processing device according to claim 5, wherein the processing of causing the other chips to infer the index value is shared such that loads of the plurality of chips become equal.

12. The information processing device according to claim 5, wherein the processing of causing the other chips to infer the index value is shared depending on a heat generation state of the chip.

13. The information processing device according to claim 5, wherein in a case in which a remaining capacity of a battery provided in the vehicle is equal to or less than a predetermined threshold value, the processing capability of the plurality of chips is lowered to maintain the battery.

14. The information processing device according to claim 13, wherein a user is able to select whether to lower the processing capability.

15. An information processing device comprising:

one or a plurality of information acquisition units capable of acquiring information related to a vehicle;

one or a plurality of chips that are provided for each one or a plurality of pieces of the information and infer an index value from predetermined information among the plurality of pieces of the information;

an index value acquisition unit that acquires the index value from the chips provided in another apparatus different from the vehicle; and

a driving control unit that executes driving control of the vehicle on the basis of the plurality of index values inferred in the vehicle and the other apparatus.

16. The information processing device according to claim 15, wherein

the chip infers the index value by multivariate analysis by an integration method using deep learning.

17. The information processing device according to claim 15, further comprising

an anchor chip that aggregates a plurality of the index values inferred by the plurality of chips to infer an index value,

wherein the driving control unit executes driving control of the vehicle on a basis of the index value aggregated by the anchor chip.

18. The information processing device according to claim 15, wherein the information processing device causes the other chips to infer the index value according to loads of the plurality of chips.

19. The information processing device according to claim 15, wherein the information processing device causes processing capability of processing in which the chip infers the index value to be varied according to a load of the chip.

20. A program for causing a computer to function as the information processing device according to any one of claims 1 to 19.

21. An information processing system comprising:

the information processing device according to any one of claims 15 to 19 provided in a vehicle;

one or a plurality of information acquisition units that are provided in another apparatus different from the vehicle and are capable of acquiring information related to the vehicle; and

one or a plurality of chips that are provided for each of one or a plurality of pieces of the information in the other apparatus and infer an index value from predetermined information among a plurality of pieces of the information.

22. The information processing system according to claim 21, wherein

the other apparatus includes another vehicle that is a vehicle different from the vehicle.

23. The information processing system according to claim 21, wherein

the other apparatus includes a monitoring device that monitors a road.

24. The information processing system according to claim 23, wherein

a monitoring device installed on a road is included as the monitoring device.

# FIG.1

Cloud — 2

| Rader | Vibration | Weather forecast |
| LiDAR | Infrared rays | Multi-channel GPS |
| Camera | Ultraviolet rays | Satellite data |
| Microsound | Electromagnetic waves | Long-tail incident AI data |
| Ultrasonic | Temperature | Thermal sensor |

FIG.2

FIG.3

EP 4 620 767 A1

## FIG.4

FIG.5

$$V = \int_a^b f(A)\,dt$$

Accel$_n$

Velocity$_n$

$$V_n = DL\big(f(A, B, C, \ldots, N)(dA_n/dt)\big)$$

# FIG.6

1200

EP 4 620 767 A1

# FIG.7

EP 4 620 767 A1

# FIG.8

# FIG.9

FIG.10

## INTERNATIONAL SEARCH REPORT

| International application No. |
|---|
| **PCT/JP2023/040302** |

### A. CLASSIFICATION OF SUBJECT MATTER

***B60W 50/06***(2006.01)i; ***B60R 16/02***(2006.01)i; ***B60W 40/02***(2006.01)i; ***B60W 40/12***(2012.01)i; ***B60W 60/00***(2020.01)i;
***G06N 3/04***(2023.01)i; ***G06N 3/08***(2023.01)i; ***G06N 7/00***(2023.01)i; ***G08G 1/09***(2006.01)i; ***G08G 1/16***(2006.01)i
FI:    B60W50/06; B60R16/02 660G; B60W40/02; B60W40/12; B60W60/00; G06N3/04; G06N3/08; G06N7/00; G08G1/09 H;
G08G1/16 C

According to International Patent Classification (IPC) or to both national classification and IPC

### B. FIELDS SEARCHED

Minimum documentation searched (classification system followed by classification symbols)

B60W40/00-60/00; B60R16/02; G06N3/00-3/10; G06N7/00; G08G1/00-1/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2022-168852 A (NVIDIA CORP) 08 November 2022 (2022-11-08) paragraphs [0005]-[0579], fig. 1-10D | 1, 3, 5-11, 15, 17-24 |
| Y | | 2, 4, 12-14, 16, 20-24 |
| Y | JP 2022-26419 A (NEC COMMUNICATION SYST) 10 February 2022 (2022-02-10) paragraphs [0026]-[0059] | 2, 16, 20-24 |
| Y | WO 2018/097317 A1 (INOUE, Katsumi) 31 May 2018 (2018-05-31) paragraphs [0087]-[0288] | 4, 20 |
| Y | JP 9-138716 A (TOSHIBA CORP) 27 May 1997 (1997-05-27) paragraphs [0015]-[0041] | 12-14, 20-24 |
| A | JP 2021-524416 A (EAGLE AEROSPACE LTD) 13 September 2021 (2021-09-13) entire text | 1-24 |

☑ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 January 2024** | **30 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2023/040302**

| C. | DOCUMENTS CONSIDERED TO BE RELEVANT | | |
|---|---|---|---|
| Category* | Citation of document, with indication, where appropriate, of the relevant passages | | Relevant to claim No. |
| A | JP 2021-157653 A (PANASONIC IP MAN CORP) 07 October 2021 (2021-10-07)<br>entire text | | 1-24 |
| A | JP 2020-164105 A (MAZDA MOTOR) 08 October 2020 (2020-10-08)<br>entire text | | 1-24 |

Form PCT/ISA/210 (second sheet) (July 2022)

## INTERNATIONAL SEARCH REPORT
### Information on patent family members

International application No.

**PCT/JP2023/040302**

| Patent document cited in search report | | | Publication date (day/month/year) | Patent family member(s) | | | Publication date (day/month/year) |
|---|---|---|---|---|---|---|---|
| JP | 2022-168852 | A | 08 November 2022 | US | 2022/0350683 | A1 | |
| | | | | paragraphs [0056]-[0678], fig. 1-10D | | | |
| | | | | DE | 102022108711 | A1 | |
| | | | | CN | 115248689 | A | |
| | | | | KR | 10-2022-0149800 | A | |
| | | | | AU | 2022202702 | A1 | |
| JP | 2022-26419 | A | 10 February 2022 | (Family: none) | | | |
| WO | 2018/097317 | A1 | 31 May 2018 | US | 2020/0410039 | A1 | |
| | | | | paragraphs [0095]-[0317] | | | |
| JP | 9-138716 | A | 27 May 1997 | (Family: none) | | | |
| JP | 2021-524416 | A | 13 September 2021 | US | 2021/0284127 | A1 | |
| | | | | entire text | | | |
| | | | | WO | 2020/006641 | A1 | |
| | | | | CN | 112601685 | A | |
| | | | | CA | 3105853 | A1 | |
| JP | 2021-157653 | A | 07 October 2021 | US | 2022/0172027 | A1 | |
| | | | | entire text | | | |
| | | | | WO | 2021/192497 | A1 | |
| | | | | DE | 112021000097 | T5 | |
| JP | 2020-164105 | A | 08 October 2020 | US | 2022/0176980 | A1 | |
| | | | | entire text | | | |
| | | | | WO | 2020/202977 | A1 | |
| | | | | EP | 3932768 | A1 | |
| | | | | CN | 113646223 | A | |

Form PCT/ISA/210 (patent family annex) (July 2022)

**EP 4 620 767 A1**

**REFERENCES CITED IN THE DESCRIPTION**

**Patent documents cited in the description**

- JP 2022035198 A
- JP 2022182132 A
- JP 2022206068 A
- JP 2022206069 A
- JP 2022206070 A